## Europäisches Patentamt
## European Patent Office
## Office européen des brevets

(11) Veröffentlichungsnummer: **0 221 261**
**A1**

(12) **EUROPÄISCHE PATENTANMELDUNG**

(21) Anmeldenummer: **86111112.8**

(22) Anmeldetag: **12.08.86**

(51) Int. Cl.⁴: **F16H 39/48 , F41D 7/00**

(30) Priorität: **04.10.85 CH 4304/85**

(43) Veröffentlichungstag der Anmeldung:
**13.05.87 Patentblatt 87/20**

(84) Benannte Vertragsstaaten:
**AT BE CH DE FR GB IT LI NL SE**

(71) Anmelder: **CONTRAVES AG**
**Schaffhauserstrasse 580**
**CH-8052 Zürich(CH)**

(72) Erfinder: **Meier, Ghert**
**Brunnacherstrasse 9**
**CH-8174 Stadel(CH)**

(54) **Hydrauliksystem.**

㉗ Der insbesondere für eine Gatlingkanone (1) vorgesehene und hydraulisch betätigte Drehantrieb (7) hat einen ersten, für die Antriebsphase und Aufrechterhaltung einer Betriebsdrehzahl sowie für die Bremsphase als Grundlastmotor ausgelegten Hydraulikmotor (8) sowie einen ständig damit in Wirkverbindung stehenden zweiten, als Hilfsmotor ausgelegten Hydraulikmotor (9). Der zweite Hydraulikmotor (9) ist in der Hochlaufphase bis zum Erreichen der erforderlichen Betriebsdrehzahl sowie in der Bremsphase für einen energiesparenden Betrieb dem ersten Hydraulikmotor (8) mit geeigneten Mitteln automatisch zusteuer-und/oder zuschaltbar.

Das Zusteuern oder Zuschalten wird einerseits durch ein mit den Hydraulikmotoren (8,9) und andererseits mit einer Druckquelle sowie einem Tank in Wirkverbindung stehenden Hydrauliksystem erreicht, welches mehrere Vorlauf-, Rücklauf-, Steuer-und Bypassleitungen sowie Ventile umfasst, die entsprechend den Anforderungen steuer-und/oder schaltbar sind.

FIG. 1

EP 0 221 261 A1

## Hydrauliksystem

Die Erfindung betrifft ein Hydrauliksystem für einen Antrieb, insbesondere für den Drehantrieb einer Gatlingkanone, mit mindestens einem Hydraulikmotor und einem Regelsystem für die Drehzahlregelung.

Bei einem allgemein bekannten, im wesentlichen durch ein Hydrauliksystem betriebenen Drehantrieb wird die zu drehende Masse in verhältnismässig kurzer Zeit auf eine relativ hohe Betriebsdrehzahl beschleunigt und mittels des Drehantriebs auch wieder schnell abgebremst. Dieser Drehantrieb ist für das maximal erforderliche Drehmoment ausgelegt und im Vergleich zu den Anforderungen, bei welchem im wesentlichen nur die Betriebsdrehzahl aufrechterhalten werden soll, entsprechend überdimensioniert.

Für die Aufrechterhaltung der Betriebsdrehzahl ist bei dem Bekannten Drehantrieb nur ein verhältnismässig geringes Drehmoment, beziehungsweise ein verhältnismässig geringer Hydraulikdruck am Hydraulikmotor erforderlich. Dies hat zur Folge, dass nach Erreichen der Betriebsdrehzahl der Druck des dem Drehantrieb zugeführten Hydraulikmediums durch Drosselung stark reduziert werden muss, wobei diese Drosselung wiederum zu Verlusten führt und einen schlechten Wirkungsgrad des Drehantriebs bewirkt.

Der Erfindung liegt die Aufgabe zugrunde, ein Hydrauliksystem für einen Antrieb der genannten Art zu finden, mit welchem bei kompakter Bauweise ein verbesserter Betriebswirkungsgrad erreicht wird. Die Lösung dieser Aufgabe erfolgt aufgrund der kennzeichnenden Merkmale des Patentanspruchs 1.

Vorteilhafte Ausgestaltungen der Erfindung sind Gegenstand der abhängigen Ansprüche und in der folgenden Beschreibung anhand der Zeichnung näher erläutert.

Die Zeichnung zeigt als Anwendungsbeispiel einen schematisch dargestellten Teil einer Gatlingkanone mit zugeordnetem Drehantrieb, sowie ein als Blockschaltbild dargestelltes Regelsystem mit verschiedenen Betriebszuständen, wobei

Fig.1 das als Blockschaltbild dargestellte Regelsystem in Betriebsbereitschaft,

Fig. 2 das Regelsystem gemäss Fig.1 in der Hochlaufphase,

Fig. 3 das Regelsystem gemäss Fig.1 im Betriebszustand mit geregelter Drehzahl, und

Fig. 4 das Regelsystem gemäss Fig.1 in der Bremsphase des Drehantriebs zeigt.

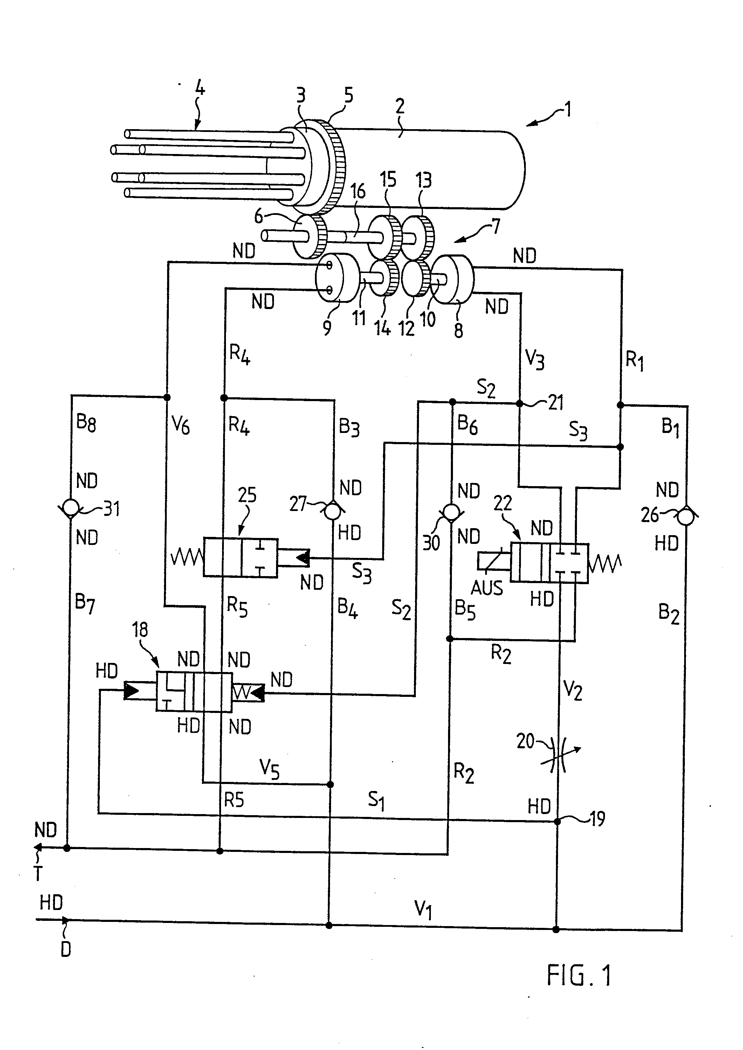

In den Figuren 1 bis 4 die sich lediglich durch eingetragene, betriebszustandsabhängige Drucksymbole unterscheiden, bezeichnet 1 eine Kanone nach dem Gatling-Prinzip, mit einem in einem Waffengehäuse 2 in nicht näher dargestellter Weise drehbar gelagerten Rotor 3, der ein Rohrbündel 4 trägt und im wesentlichen durch ein Zahnradpaar 5,6 mit einem Drehantrieb 7 zur Erreichung einer möglichst schnellen Hochlauf-und Bremsphase in Wirkverbindung steht.

Der mit dem Rotor 3 über das Zahnradpaar 5,6 in ständiger Antriebsverbindung stehende Drehantrieb 7 hat zwei Hydraulikmotore 8,9, z.B. nach einem Achsialkolbenprinzip bekannter Ausführung, deren Wellen 10,11 über Zahn räder 12,13 bzw. 14,15 gemeinsam auf eine Welle 16 wirken, welche das eine Zahnrad 6 für den Antrieb des Kanonenrotors 3 trägt. Der erste Motor 8 ist für die Grundlast des Antriebs vorgesehen und so dimensioniert, dass er mit einer für die Drehzahlregelung ausreichenden Drosselung des zur Verfügung stehenden Hydraulikdrucks eine mit Hilfe des zweiten Motors 9 erreichte Betriebsdrehzahl für den länger andauernden Betrieb aufrechterhalten kann.

Der als Hilfsmotor vorgesehene zweite Motor 9 wird somit nur bei grossen, einstellbaren Drehzahlabweichungen, welche insbesondere in der Hochlauf-und in der Bremsphase auftreten können, zur Unterstützung dem ersten Motor 8 zugeschaltet. Die Zuschaltung des zweiten Motors 9 erfolgt automatisch durch ein Steuerventil 18, das durch den Druckzustand in einer zu dem ersten Motor 8 führenden Hydraulik-Vorlaufleitung V1,V2,V3 gesteuert wird. Die hierfür erforderlichen Steuerleitungen S1 und S2 zweigen von dieser Vorlaufleitung V1,V2,V3 ab, wobei die eine Abzweigstelle 19 für die Steuerleitung S1 vor einem Mengenregel-Ventil 20 für die Regelung des Durchflusses zu dem ersten Motor 8 angeordnet ist, während die andere Abzweigstelle 21 für die Steuerleitung S2 hinter einem in der Vorlaufleitung V2,V3 vorgesehenen EIN/AUS-Absperrventil 22 angeordnet ist.

Eine mit V5 und V6 bezeichnete Vorlaufleitung, in der das Steuerventil 18 angeordnet ist, dient für den Antrieb des zweiten Motors 9. Mit R1 und R2 sowie mit R4 und R5 sind an den beiden Motoren 8 und 9 angeschlossene Rücklaufleitungen bezeichnet, wobei in der Rücklaufleitung R4,R5 ein weiteres, als Bremsventil arbeitendes Ventil 25 angeordnet ist. Die Rücklaufleitungen R1,R2 und R4,R5 führen gemäss Pfeilrichtung T zu einem nicht dargestellten Tank, während die Vorlaufleitungen V1,V2, V3 sowie V5,V6 gemäss Pfeilrichtung D von einer nicht dargestellten Druckquelle kommen.

In den Figuren 1 bis 4 sind die Betriebszustände vor und hinter den in drucklosem Zustand dargestellten Ventilen 18,22 und 25 angegeben. Die Betriebszustände sind beispielsweise mit HD,ND und ZD für den in der jeweiligen Leitung vorhandenen Druck des Hydraulikmediums bezeichnet, wobei HD für Hochdruck, ND für niederen Druck von z.B. Null und ZD für einen Zwischenwert zwischen dem Hochdruck HD und dem Niederdruck ND verwendet ist.

Bei Betriebsbereitschaft des hydraulischen Drehantriebs 7 entsprechend Fig.1 ist in den zu den Motoren 8,9 führenden Vorlaufleitungen V1,V2 und V5 bis zu den Ventilen 22,18 der volle durch die Druckquelle gelieferte Druck HD vorhanden. Weiterhin ist in zwei, im wesentlichen die Ventile 18,25 und 22 überbrückenden Bypassleitungen B1,2 und B3,4 bis zu entsprechend zugeordneten Rückschlagventilen 26 und 27 der volle Druck HD vorhanden.

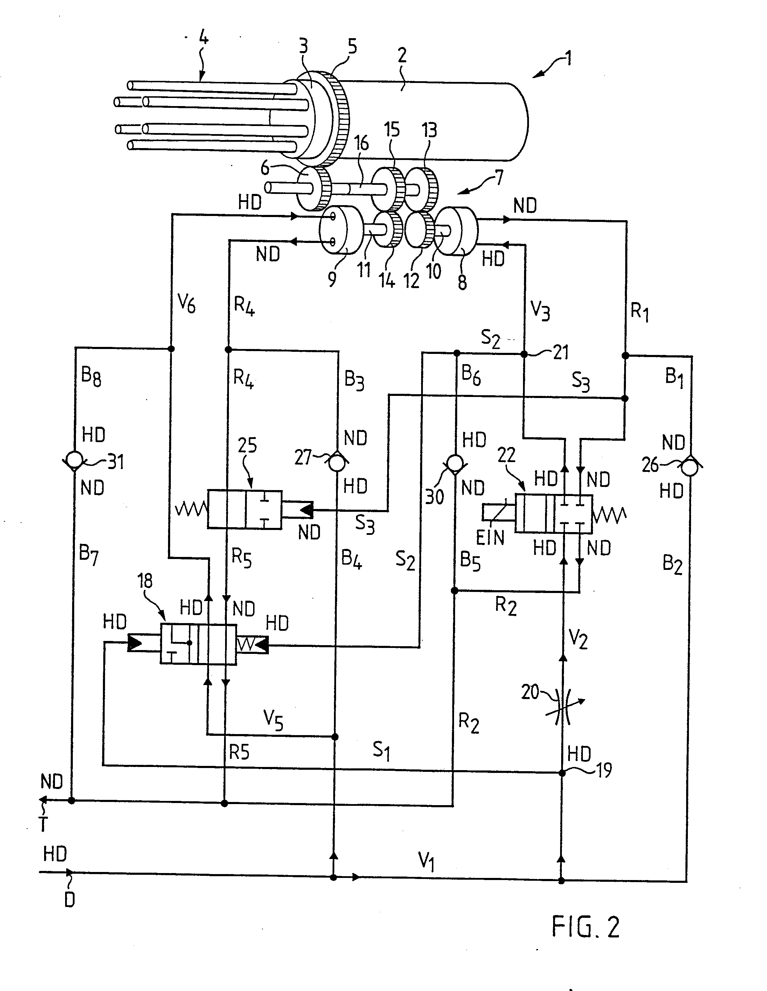

Fig.2 veranschaulicht den Zustand des Regelsystems nach Oeffnen des beispielsweise solenoidbetätigten Absperrventils 22, in welcher der hydraulische Drehantrieb 7 in Hochlaufphase mit maximaler Beschleunigung ist. Das Absperrventil 22 öffnet und schliesst gleichzeitig die Vorlaufleitung V1 bis V3 sowie die Rücklaufleitung R1 und R2, wobei auch das Mengenregel-Ventil 20 voll geöffnet ist. Dadurch, dass nach Oeffnen des Absperrventils 22 die zu dem Steuerventil 18 führende Steuerleitung 52 den vollen Druck HD erhält, öffnet sich auch das Steuerventil 18, so dass im wesentlichen durch die Wirkverbindung der Hochlauf durch die gemeinsame volle Leistung beider Hydraulikmotore 8,9 erfolgt. Ebenso wie das Absperrventil 22 öffnet auch das Steuerventil 18 gleichzeitig die von dem zweiten Motor 9 kommende und zu dem Tank führende Rückleitung R4,R5. Das in der Rückleitung R4,R5 vorgesehene Bremsventil 21 ist aufgrund des vorliegenden Niederdrucks ND in einer mit der Rücklaufleitung R1 verbundenen und das Bremsventil 25 steuernden Steuerleitung S3 voll geöffnet.

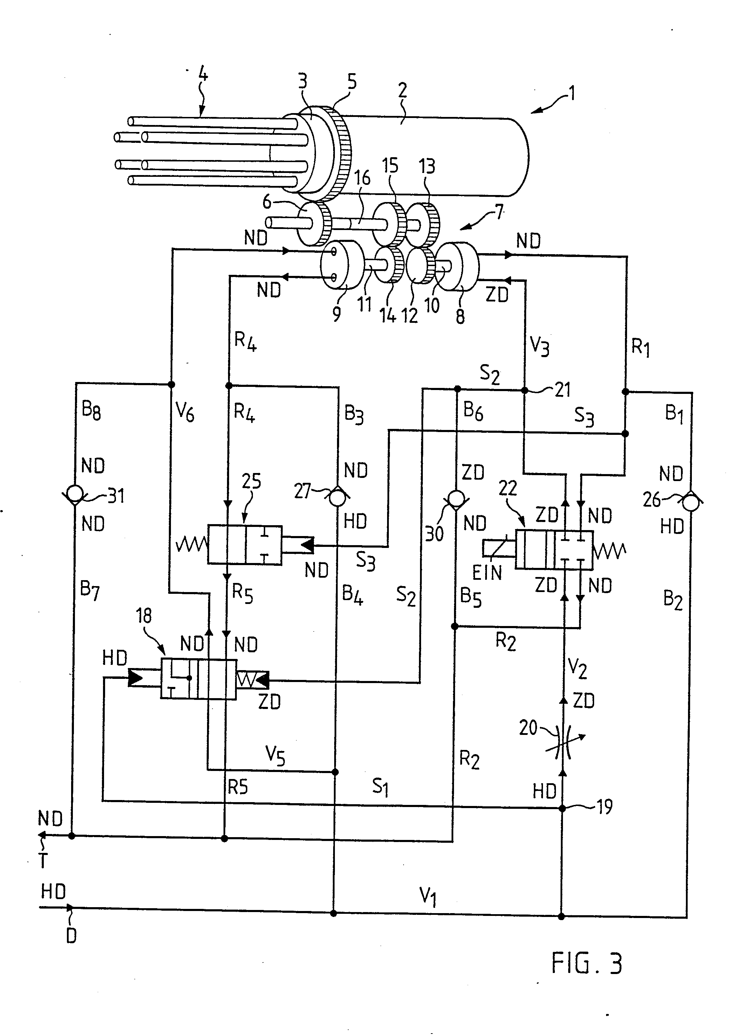

Im Anschluss an die Hochlaufphase nach Fig.2 folgt der Zustand mit geregelter Drehzahl entsprechend den Druckangaben gemäss Fig.3. Der für die Erzeugung des Drehmoments im ersten, dem Grundlastmotor 8 erforderliche Druck entspricht einem Zwischenwert ZD und ist durch das Mengenregel-Ventil 20 in Abhängigkeit von der Drehzahl des Drehantriebs 7 geregelt. Der reduzierte Druck ZD in der Vorlaufleitung V3 zu dem ersten Motor 8 ist auch in der angeschlossenen Steuerleitung S2 vorhanden, so dass durch den höheren Druck vor dem Mengenregel-Ventil 20 und in der angeschlossenen Steuerleitung S1 das Steuerventil 18 für die Regelung des zweiten Motors 9 geschlossen bleibt und dadurch der Motor 9 keine zusätzliche Leistung abgibt. Die Betätigung des Steuerventils 18 erfolgt somit und ausschliesslich aufgrund der Druckdifferenz HD/ZD in den Vorlaufleitungen V1 bis V3 und Steuerleitungen S1 und S2.

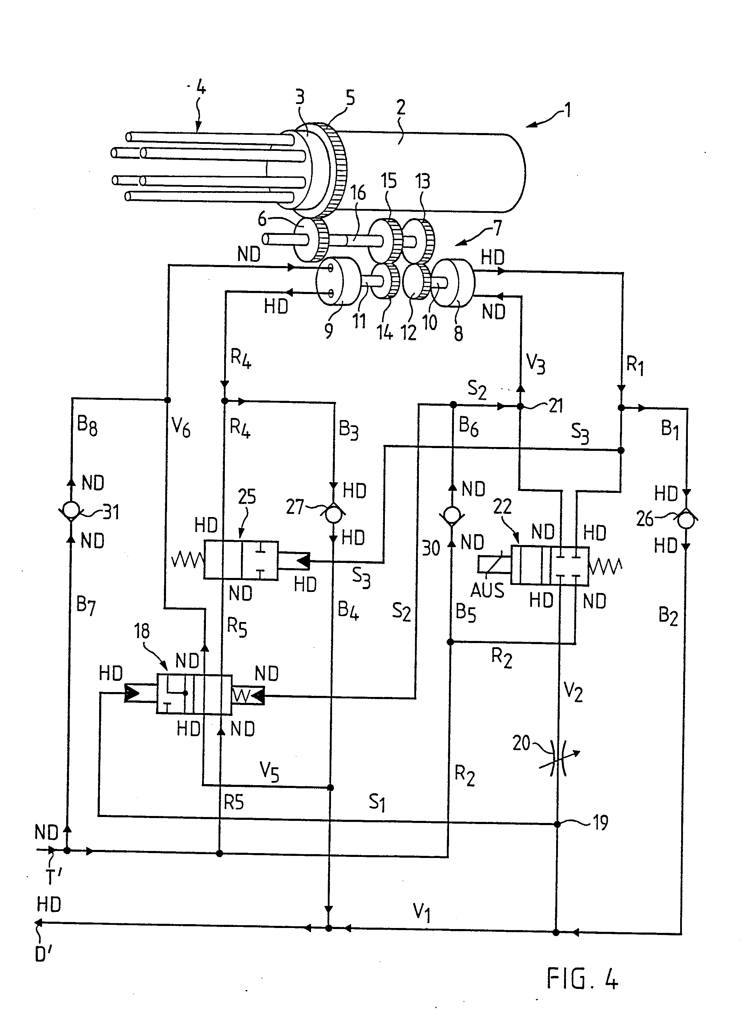

Fig.4 veranschaulicht den Zustand des Regelsystems sowie die Arbeitsweise der einzelnen Ventile 18,22,25,26,27,30 und 31 in der Bremsphase des Drehantriebs 7. Dabei deutet die gleiche Druckangabe HD oder ND auf beiden Seiten des jeweiligen Ventils darauf hin, dass das Ventil geöffnet ist, wie es an den Rückschlagventilen 26,27 sowie 30,31 zu sehen ist, während die unterschiedlichen Druckangaben an den Ventilen 22,18 und 25 zeigen, dass diese Ventile in der Bremsphase geschlossen sind.

Die Bremsphase wird im wesentlichen durch Schliessen des solenoidbetätigten EIN/AUS-Ventils 22 eingeleitet. Dies hat zur Folge, dass dem ersten Motor 8 kein antreibendes Hydraulikmedium mehr über die Vorlaufleitung V1 bis V3 zugeführt wird und der Motor 8 auf Pumpbetrieb, angetrieben durch das Bremsmoment des Trägheitsmoments des Kanonenrotors 3, wechselt. Dies führt zu einer Druckerzeugung in der Rücklaufleitung R1 und zum Oeffnen des in der Bypassleitung B1,B2 angeordneten Rückschlagventils 26, so dass das Hydraulikmedium in Pfeilrichtung D'zu der nicht dargestellten Druckquelle bzw. einem Druckspeicher auf Energie gewinnende Weise zugeführt wird. Der in der Bremsphase entstehende Druckanstieg in der Rücklaufleitung R1 bewirkt auch einen Druckanstieg in der an der Leitung R1 angeschlossenen und zu dem Bremsventil 25 führenden Steuerleitung S3, so dass das Bremsventil 25 geschlossen wird. Dies hat zur Folge, dass der ständig mitlaufende zweite Motor 9 im Pumpenbetrieb über die Bypassleitung B3 und B4 und das sich dabei öffnende Rückschlagventil 27 ebenfalls das Hydraulikmedium in Energie gewinnender Weise zu der Druckquelle zurück fördert. Bei diesem Vorgang (Bremsphase) wird das Hydraulikmedium einerseits über eine weitere mit einem Rückschlagventil 30 versehene Bypassleitungen B5,B6 und der Vorlaufleitung V3 durch den Pumpbetrieb des ersten Motors 8 und andererseits über eine weitere, mit einem Rückschlagventil 31 versehene Bypassleitung B7,B8 und der Vorlaufleitung V6 durch den Pumpbetrieb des zweiten Motors 9, wie in Fig.4 dargestellt, in Pfeilrichtung T' von dem nicht dargestellten Tank angesogen.

Die in dem vorstehend anhand der Figuren 1 bis 4 beschriebenen Regelsystem verwendeten Ventile sind auf an sich bekannte Weise ausgeführt, wie es sich aufgrund ihrer beschriebenen Funktion ergibt, so dass ihre Darstellung drucklos auf symbolhafte Weise entsprechend dem internationalen Standart ISO 1219 erfolgte.

**Ansprüche**

1. Hydrauliksystem für einen Antrieb, insbesondere für den Drehantrieb einer Gatlingkanone, mit mindestens einem Hydraulikmotor und einem Regelsystem für die Drehzahlregelung, dadurch gekennzeichnet, dass zwei über einen Drehantrieb (7) mechanisch gekoppelte und auf den Rotor (3) der Kanone (1) wirkende Hydraulikmotoren (8,9) mit dem in wesentlichen aus Vorlauf-, Rücklauf-und Steuerleitungen sowie Ventilen gebildeten Hydrauliksystem derart wirkverbunden sind, dass dem einen für die Antriebs-, Betriebs-und Bremsphase ausgelegten Hydraulikmotor (8) der andere, als Hilfsmotor ausgelegte Hydraulikmotor (9) automatisch zusteuer-oder zuregelbar ist.

2. Hydrauliksystem nach Anspruch 1, dadurch gekennzeichnet, dass in der zum zweiten Hydraulikmotor (9) führenden Vorlaufleitung (V5,V6) ein Steuerventil (18) angeordnet ist, dass über Steuerleitungen (S1,S2) durch einen Differenzdruck in der zum ersten Hydraulikmotor (8) führenden Vorlaufleitung (V1-V3) gesteuert wird, wobei in der genannten Vorlaufleitung (V1-V3) zwischen Anschlussstellen (19,21) für die Steuerleitungen - (S1,S2) ein Mengenregel-Ventil (20) vorgesehen ist.

3. Hydrauliksystem nach Anspruch 1, dadurch gekennzeichnet, dass die an den Hydraulikmotoren (8,9) angeschlossenen und zu einem Tank führenden Rücklaufleitungen (R1,R2 und R4,R5) in der Bremsphase des Drehantriebs (7) durch zugeordnete Ventile (22,25,18) absperrbar und jeweils durch eine mit einem Rückschlagventil (26,27) versehene und zu einer Druck quelle führenden Bypassleitung (B1,B2 und B3,B4) überbrückbar sind.

4. Hydrauliksystem nach Anspruch 1 und 3, dadurch gekennzeichnet, dass das in der Rücklaufleitung (R4,R5) angeordnete Ventil (25) durch die Steuerleitung (S3) mit der Rücklaufleitung (R1) wirkverbunden und durch den in der Rücklaufleitung (R1) vorhandenen Druck steuerbar ist.

5. Hydrauliksystem nach einem der vorstehenden Ansprüche, dadurch gekennzeichnet, dass das in den Vorlaufleitungen (V1,V2 und V5,V6) angeordnete Ventil (22 und 18) jeweils durch eine mit einem Rückschlagventil (30 und 31) versehene und zu einem Tank führende Bypassleitung (B5,B6 und B7,B8) überbrückbar ist.

6. Hydrauliksystem nach Anspruch 1 bis 5, dadurch gekennzeichnet, dass das Ventil (18) in der Vorlaufleitung (V5,V6) als Steuerventil, das Ventil (22) in der Vorlaufleitung (V2,V3) als Absperrventil und das Ventil (25) in der Rücklaufleitung (R4,R5) als Bremsventil arbeitet.

FIG. 1

FIG. 2

FIG. 3

FIG. 4

**Europäisches Patentamt**

**EUROPÄISCHER RECHERCHENBERICHT**

Nummer der Anmeldung

EP 86 11 1112

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 199 516 (HYDRAULIK A/S) <br> * Seiten 1-3; Figuren * | 1,2 | F 16 H 39/48 <br> F 41 D 7/00 |
| | --- | | |
| A | GB-A-2 061 467 (COMMERCIAL SHEARING) <br> * Zusammenfassung; Figuren * | 1,2 | |
| | --- | | |
| A | FR-A-2 100 265 (ABEX) | | |
| | --- | | |
| A | US-A-4 046 056 (CARRIE) | | |
| | ----- | | |

| RECHERCHIERTE SACHGEBIETE (Int. Cl.4) |
|---|
| F 16 H 39/00 <br> F 41 D 7/00 <br> F 41 D 10/00 |

Der vorliegende Recherchenbericht wurde für alle Patentansprüche erstellt.

| Recherchenort | Abschlußdatum der Recherche | Prüfer |
|---|---|---|
| DEN HAAG | 05-01-1987 | FLORES E. |

EPA Form 1503 03 82

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument